# EUROPEAN PATENT SPECIFICATION

(11) **EP 1 828 442 B1**
(45) Date of publication and mention of the grant of the patent: **23.05.2012**
(21) Application number: 05855260.5
(22) Date of filing: 22.12.2005
(51) Int. Cl.: C25F 5/00, C25F 3/02, B23H 3/08, C01B 31/34, C01B 31/06

(54) **ELECTROCHEMICAL DISSOLUTION OF CONDUCTIVE COMPOSITES**
ELEKTROCHEMISCHE AUFLÖSUNG ELEKTRISCH LEITENDER ZUSAMMENSETZUNGEN
DISSOLUTION ELECTROCHIMIQUE DE COMPOSITES CONDUCTEURS

(30) Priority: 23.12.2004 US 638763 P; 24.06.2005 WO PCT/US2005/022852
(43) Date of publication of application: 05.09.2007
(73) Proprietor: Diamond Innovations, Inc., Worthington, OH 43085 (US)
(72) Inventor: O'NEILL, Padraic, 6W Dublin (IE); WEI, Bin, Mechanicville, NY 12118 (US)
(74) Representative: Hägglöf, Henrik
(86) International application number: PCT/US2005/046671
(87) International publication number: WO 2006/071745

(56) References cited:
- WO-A-2004/106592
- DD-A1- 151 333
- RU-C1- 2 165 885
- US-A- 4 234 333
- US-A- 4 349 423
- US-A- 4 385 972
- US-A- 5 384 016
- US-A- 6 110 351
- INT J REFRACT MET HARD MATER; INTERNATIONAL JOURNAL OF REFRACTORY METALS AND HARD MATERIALS 1996 ELSEVIER SCIENCE LTD, OXFORD, ENGL, vol. 14, no. 4, 1996, pages 229-234, XP002379108

## Description

### RELATED APPLICATIONS AND CLAIM OF PRIORITY

This application claims priority to United States Provisional Patent Application No. 60/638,763, filed December 23, 2004. This application also claims priority to, and is a continuation-in-part of, International Patent Application No. PCT/US05/22852, filed June 24, 2005.

### TECHNICAL FIELD

The present disclosure relates to an electrochemical method to release and recover constituent components from conductive composites having one or more conductive components and one or more non-conductive components.

### BACKGROUND

Reinforced metal and carbon matrix composites are widely applied in the aerospace and automotive industries. These reinforced composites offer mechanical, physical, electrical, and chemical advantages over un-reinforced metal alloys or conventional materials. As the use of these reinforced materials increases, recovery of the composites' constituent components has increasing economic, ecological, or strategic value. Recovery of the reinforcing phases, such as expensive boron or tungsten, for recycling or reuse has economic importance. Recovery of metal matrix alloy components such as cobalt or refractory metals has strategic importance. Many of these reinforced composites have an electrically conductive matrix phase and a less conductive or less chemically reactive dispersed, reinforcing phase. As noted previously, the conductive matrix may be metallic or carbonaceous, but other conductive matrices are known or under development.

Chemical methods have been used to recover the composite constituents. These chemical processes can be slow, may involve expensive equipment or equipment with high maintenance costs, generally use hazardous chemicals, and may result in environmentally detrimental by-products. Chemical recovery processes may employ strong corrosive substances such as hydrofluoric, sulfuric, and nitric acids. Recovery, recycling, or disposal of the reaction wastes from these processes is expensive. These slow chemical methods may be accelerated by reducing the composite sizes to increase reaction area, increasing the temperature or pressures of the recovery process, and employing high agitation rates. This acceleration may further increase the cost of the equipment, increase the amount of hazardous waste generated, increase maintenance costs, introduce process hazards, or damage the materials to be recovered.

Electrochemical methods can accelerate recovery of composite constituents when compared to purely chemical processes. These electrochemical processes generally include: (1) corrosive media; (2) reduction of composite material to small sizes; and/or (3) low current densities. For example, Soviet Union Patent No. SU 1528727A1, entitled "Method of Reclaiming Diamonds," describes an electrolytic process for diamond particle recovery from spent metal matrix abrasive tools. The metallic matrix is dissolved in a highly acidic aqueous solution of HNO₃ and NaF or KF at low current densities of about 0.09 to about 0.13 amps per square centimeter (A/cm²) of electrode area. The process involves reducing the composites to dimensions of 1 to 3 mm to facilitate dissolution. In general, these electrochemical processes require highly acidic electrolytes of pH less than 5.0, static or mildly agitated baths, and a large electrode spacing. While electrochemical recovery methods can be faster than pure chemical methods, the low current density provides a slow rate of dissolution. The problems of corrosive electrolytes and hazardous wastes remain.

The above recovery methods use strong acids. The resultant corrosive wear of recovery equipment and hazardous waste treatment required increases the cost and complexity of these recovery processes. Accordingly, there remains a need to provide a method of electrochemical recovery for conductive composites that does not employ mechanical processing, strongly acidic solutions, or require the treatment of hazardous wastes.

Electrochemical methods for machining metals are an established alternative to conventional grinding, turning and other cutting methods. As commonly employed, for example to produce blades for turbomachinery, electrochemical machining imparts a specific and highly controlled geometry or contour to the metallic work piece. In general, electrochemical machining removes only a small portion of the work piece mass or volume Electrochemical machining of composites is not widely practiced. One example is described in United States Patent No. 6,110,351, to Hihara et al., entitled "Method of electrochemical machining (ECM) of particulate metal-matrix composites (MMcs)," The conductive composite so machined comprises an aluminum metal or aluminum alloy matrix reinforced with a silicon carbide ceramic particulate. The described machining method employs a current density less than 10 A/cm², and preferably less than about 2 A/cm². Because the material removal rate is proportional to current density, dissolution will be relatively slow. Further, this electrochemical process is directed to overcoming the difficulties of conventional cutting methods for MMCs, forming the MMC into a particular shape, and the patent does not describe recovery methods for either the metallic or non-conductive composite constituents.

US 4,234,333 A discloses a process according to the preamble of claim 1 for recovering metal carbide powders from cemented carbides containing a metal binder phase by anodic dissolution of the binder phase under controlled electrochemical potential and current density conditions to produce a greatly accelerated rate of dissolution of the binder phase without significant dissolution of the metal carbide grains.

The disclosure contained herein describes methods according to claim 1 that solve one or more of the problems described above.

### SUMMARY

In an embodiment, a process of recovering material from a conductive composite body includes at least partial electrolytic dissolution of a solid conductive composite body and recovery of one or more materials released from the composite during the dissolution. The composite comprises an electrically conductive matrix and one or more non-conductive phases. The non-conducting phase of the conductive composite may make up at least about 5 volume percent, or another percentage such as up to about 95 volume percent, of the composite. The recovery process may use an electrochemical apparatus comprising a cathode and an anode. The conductive composite may form the anode or be attached to the anode using a mechanical, electrical, pneumatic, magnetic or other force. Optionally, the gap size may be substantially uniform and may be less than about 10 mm, and the gap size may be controlled during the process by moving the cathode, the conductive composite, or both the cathode and the conductive composite body.

The recovery process may be conducted in the presence of a neutral or basic electrolyte, such as an electrolyte having a pH between about 6 and about 11. The electrolyte may be directed, or otherwise delivered to flow into the inter-electrode gap between the cathode and composite body. The electrolyte flow rate may be controlled to any suitable rate, such at between about 1 and 5 liters per minute per square centimeter of electrode area. Suitable voltages, such as about 10 volts to about 50 volts, and/or current densities, such as about 10 amps per square centimeter (A/cm²) to about 100 A/cm², may be applied. The dissolution of the composite may be conducted in the transpassive voltage regime. The electrolyte may include an alkali metal, alkaline earth salt or ammonium salt, and it may have a conductivity that exceeds 100 millisiemens at temperatures from about 10° C to about 90° C. Some or all of the materials released from the conductive composite may be separated to recover one or more composite constituents. Optionally, at least about 25% of the conductive conductive composite's volume may be dissolved. Also optionally, electrolyte may be re-used in the process, even if the electrolyte contains released particles in concentration ranging from zero percent to about 15 percent.

In an alternate embodiment, a process of recovering conductive composite constituents includes at least partial electrolytic dissolution of a solid conductive composite body and recovery of one or more materials released from the composite during the dissolution. The recovery process may include positioning a composite body in an electrochemical apparatus in the presence of an electrolyte so that the conductive composite body acts as an anode and is opposed to a cathode. An electrolyte is present in the inter-electrode gap. The apparatus is subjected to a suitable voltage, such as a voltage in the range of about 5 to about 50 volts or about 10 to about 40 volts, and a current density of up to about 100 A/cm² so that at least partial dissolution of the composite occurs. Potentiometric or galvanometric methodology may be used to control the dissolution process. Optionally, multiple composite bodies may be positioned in the apparatus so that materials are released from all of the bodies at the same time. One or more of the composite constituents released from the body may then be recovered. The recovery maybe performed in a separation device or other suitable device.

In an alternate embodiment, a process of dissolving a conductive composite body that contains diamond includes at least partial electrolytic dissolution of a solid conductive composite body and recovery of one or more materials released from the composite during said dissolution. Optionally, the conductive composite may be comprised of metal, graphite, other electrical conductors or combinations thereof and non-conducting material. The metal in the composite may include any metal from any of Groups IIIA through VIIA, Group VIII, and Groups IB, IIB, IIIB and IVB of the Periodic Table, such as nickel, cobalt, iron or alloys thereof. The recovery process comprises placing a conductive composite body in an electrochemical apparatus, where the apparatus includes an anode and a cathode, so that the composite body is electrically connected to the anode. The conductive composite may be connected to the anode through mechanical, magnetic, pneumatic, hydraulic and/or other means. Optionally, a layer or other amount of conductive material may be present between the anode and the composite. The conductive material may be a conductive liquid, a conductive solid, or a combination of such liquids and solids. An inter-electrode gap may be provided between the composite and the cathode. Optionally, the process may be controlled to maintain a desired gap size. The electrochemical apparatus may include a system to advance one of the electrodes toward the other, or both electrodes toward each other, to maintain a desired gap size. The method may include delivering a flow of electrolyte into the inter-electrode gap. Optionally, the electrolyte may be provided to the inter-electrode gap through one or more openings in the cathode. The electrolyte may have a pH of about 6 to about 11, or about 6.5 to about 9, or another suitable pH. The method may include applying a current between the cathode and the conductive composite. The process may be performed at any suitable electrolyte pressure, such as about 1 bar to about 5 bar.

An electrochemical apparatus for recovering materials from a conductive matrix composite body includes: (i) an anode, wherein the anode is electrically connected to a conductive composite body, or where the composite body serves as the anode; (ii) a cathode positioned to form an inter-electrode gap between the anode and the cathode; (iii) an electrolyte supply; and (iv) a non-conductive particle recovery system. The apparatus may also include a movable anode(s) and/or cathode(s) in order to maintain the gap at a substantially uniform size. The apparatus may also include a direct current or alternating current power supply. The recovery system may include settling and/or recycling devices.

### BRIEF DESCRIPTION OF THE DRAWINGS

FIG. 1 is a block diagram illustrating exemplary components of an electrochemical dissolution apparatus.

FIG. 2 is a block diagram illustrating an exemplary electrochemical dissolution process.

FIG. 3 is a schematic diagram illustrating an exemplary electrochemical dissolution device that may dissolve a conductive composite for non-conductive particle recovery.

FIG. 4 is a block diagram illustrating exemplary components of an electrochemical dissolution apparatus.

FIG. 5 is a schematic diagram illustrating an exemplary process to electrochemically dissolve conductive composites, recover non-conductive particles and optionally recycle an electrolyte solution according to one embodiment.

### DETAILED DESCRIPTION

In the following description, numerous details are set forth in order to provide a thorough understanding of the invention. It will be apparent, however, to one of ordinary skill in the art, that the invention may be practiced in various ways without limitation.

It must also be noted that as used herein and in the appended claims, the singular forms "a", "an", and "the" include the plural reference unless the context clearly dictates otherwise. Unless defined otherwise, all technical and scientific terms used herein have the same meanings as commonly understood by one of ordinary skill in the art. Although any methods similar or equivalent to those described herein can be used in the practice or testing of embodiments of the present invention, the preferred methods are now described. All publications and statistical data mentioned herein are incorporated by reference. Nothing herein is to be construed as an admission that the invention is not entitled to antedate such documents or data.

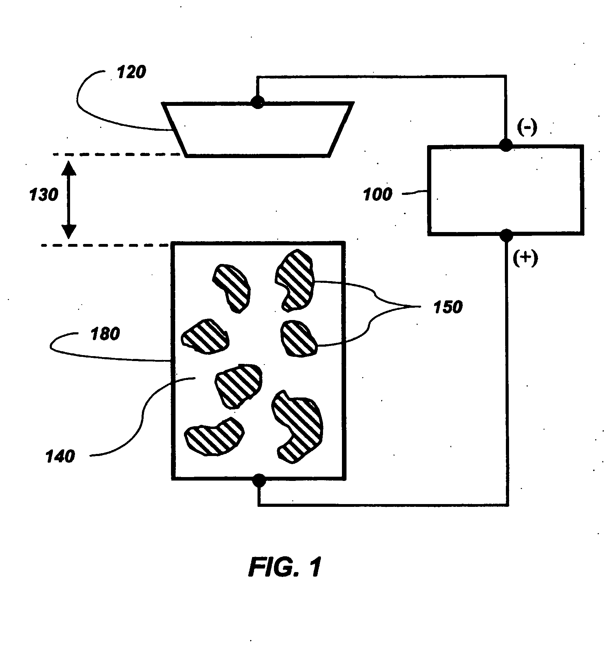

In an embodiment, a method provides for partial, substantial or complete electrolytic dissolution of a solid conductive composite body comprised of a electrically conductive matrix and a non-conductive phase. Referring to FIG. 1, a solid composite body **180** can be of any geometry, including but not limited to rectangular, prismatic, cylindrical or spherical. The conductive matrix **140** may be comprised of a single electrically conductive material, an alloy or a mixture of electrically conductive materials. Suitable conductive materials may include metals from any of Groups IIIA through VIIA, Group VIII, and Groups IB, IIB, IIIB and IVB of the Periodic Table, including but not limited to chromium, manganese, iron, cobalt, nickel, copper, zinc and/or aluminum; conductive organic composites; and/or graphite. As used herein, the term "solid body" is not meant to imply that the body must be completely solid, with no holes or inner spaces. Rather, the term "solid" refers to a state of matter (i.e., not liquid, gas or plasma).

The non-conductive component **150** contained in the composite may constitute about 5 to about 95 percent, about 10 to about 90 percent, or another fraction of the total volume of the composite. The non-conductive fraction may include any non-conductive or semi-conductive material, or it may be comprised of materials such as metal carbides, silicon nitride, silicon carbide, aluminum oxide, tungsten carbide, aluminum nitride, boron nitride, boron carbide, other nitrides and/or oxides, boron, diamond, silicate glasses, resins, polymers, organic matter and/or one or more of the non-conductive carbon polymorphs, any of which may exhibit substantially less electrical conductivity than the conductive fraction of the matrix. The non-conductive fraction may also be a phase with a different reactivity than the conductive matrix.

The non-conductive component 150 may be present in shapes having any geometry including, but not limited to, discrete particles, granules, spheres, agglomerates of particles, whiskers, fibers, and/or woven fiber matrices. As used herein, the terms "particle" and "particulate" may mean any such shape or equivalent shapes, including but not limited to particles, fibers, whiskers, woven fiber matrices, or other shapes. The non-conductive particulate can be of any size or distribution of sizes, such as for example having a diameter or width that is smaller than about one-fifth the size of the solid composite body's smallest dimension and/or less than about 5 mm. Optionally, the non-conductive component may include reinforcing structures built or woven from whiskers or fibers that may have a length that is larger than the width, even up to as large as a dimension of the size, of the composite body being processed.

Referring again to FIG. 1, the positive pole of a power supply **100** may be electrically connected to an anode **180**. FIG. 1 shows an embodiment wherein the conductive composite is the anode **180**, although in other embodiments the composite may serve as or provide an anode because it is electrically connected to a separate anode member. Such an anode member may include, for example, a monolithic member, a wire, a group of wires, a mesh, or another conductive item. The negative pole of the power supply **100** may be electrically connected to the cathode **120**, which may be positioned opposite the anode **180** so as to form an inter-electrode gap **130** between the conductive composite body **180** and cathode **120**.

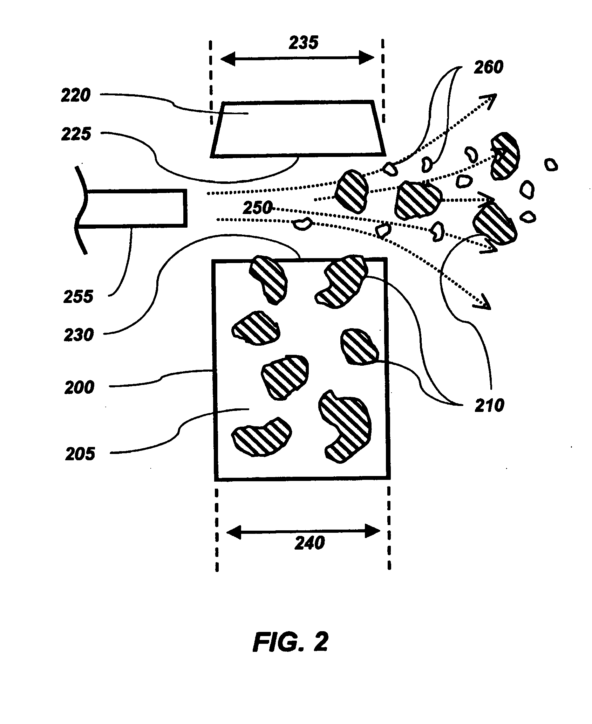

Referring to FIG. 2, an exemplary process may include using the composite **200** comprising a conducting component **205** and a non-conductive component **210** as the anode in an electrochemical apparatus, connected to a source of current. The method of connecting the conductive composite to the current source may vary depending on the geometry of the conductive composite. For example, a mechanical clamping device may provide electrical contact with the power supply. Optionally, a liquid electrode may improve electrical contact. The composite may be connected to, or contiguous with, a conductive anode member that is electrically connected to the power supply to achieve desired current densities. The connection to the anode member may be made by mechanical methods, such as straps, blocks, geometries having interference fit (such as a cylinder on a pin) or other methods such as magnetic, pneumatic or hydraulic force methods. Optionally, one or more coatings, foils, pastes and/or other conductive material layers may be used to improve electrical contact between the composite and the anode member or power supply.

The cathode(s) **220** may be of any geometry. However, in some cases it may be preferable to have the contour of the surface of the cathode **225** that faces the composite body **200** roughly mirror the contour of the surface **230** of the composite body **200** so that the inter-electrode gap between the composite body and cathode **220** is relatively uniform. Thus, for example, if the surface **230** of the composite body is convex, it may be desirable for the suface **225** of the cathode to be concave. This may promote even dissolution of the composite body so that conductive particles **210** are released into or near the gap between the anode and cathode as dissolution proceeds. Alternatively, other forms of cathodes are possible, such as porous conductive members, screens, filamentary electrodes, perforated metal electrodes or other members.

In some cases, such as those where complete dissolution of the composite is desired, it also may be desirable that the cathode have a surface width, diameter or other dimension **235** that is roughly comparable to a similar dimension **240** of the composite facing the cathode. In other cases, the cathode may be shaped to improve the flow of the electrolyte, increase the reaction surface area and/or improve the expulsion of the non-conductive phase.

Referring again to FIG. 2, the electrolyte **250** may be introduced or directed to the gap between the cathode and the composite through a nozzle, stream hose, pipe or other delivery device **255**. The electrolyte may include, for example, a concentrated metal, alkali metal, alkaline earth salt, or ammonium salt in solution such as nitrate, chlorate, perchlorate, nitrite and/or chloride of near neutral or basic pH or a mixture of any of these, optionally with other material. Other examples include lithium salts; the salts of organic acids of the water soluble type or organic acids associated with a salt (such as acetic acid alone or in combination with a salt such as ammonium acid borate, sodium borate, sodium potassium tartarate, ammonium phosphate, sodium acetate or ammonium acetate); the salts of aliphatic liquid or mono-carboxylic organic acids, capable of being associated with water, such as propionic acid, acrylic acid or butyric acid; derivatives of the mono-carboxylic acids such lactic acid, hydroxy-acrylic acid, crotonic acid, ethylene lactic acid, dihydroxy propionic acid, isobutyric acid, diethyl acetic acid, iso-amyl acetic acid and iso-butyl acetic acid; aromatic or cyclic acids such as creyulic acid (cresol) and carbolic acid (phenol); the salts of inorganic acids in combination with organic acids of either or both the alipilatic and aromatic types; and solvent electrolytes compounded from the hydroxy-alkyl amines (such as monoethanolamine, diethanolamine, or triethanolamine) in combination with a weak acid of either the organic type, inorganic type or both.

Such an electrolyte may provide a suitable level of conductivity, for example in excess of about 100 millisiemens, or in ranges of about 100 to about 200 millisiemens or about 100 to about 300 millisiemens, at temperatures in suitable ranges such as about 10°C to about 90°C, about 10°C to about 60°C, or other ranges. Electrolyte pressures of about 1 bar to about 5 bars, or other suitable pressures that allow the electrolyte to remain in a liquid phase, may be applied. Higher temperatures, including temperatures above the boiling point and up to the critical point of the electrolyte, may be possible if the pressure of the electrolyte is adjusted to prevent boiling. Optionally, the electrolyte may be mixed with an amount of abrasive material.

The conductive composite **200** may be brought into close proximity with a cathode 220 forming an inter-electrode gap. As referred to herein, the gap size is a measure of the distance between the dissolving surface **230** of the conductive composite body and the cathode surface **225** opposed to the composite body. The exact distance between the cathode and composite body may vary from location to location between the opposing surfaces. Gap size may be measured at a single location, as the calculated average of multiple measurements, directly measured, or inferred from one or more other measurements such as position of the composite body and cathode. The gap size may be controlled to ensure rapid and stable dissolution of the conductive matrix. This may be done, for example, by advancing the anode toward the cathode, by advancing the cathode toward the anode, by deforming the cathode and/or anode, or by advancing both electrodes toward each other using manual and/or mechanical methods as dissolution proceeds. Deforming may be possible where, for example, the electrode comprises a conductive fluid. For example, in various embodiments, depending on the dimensions of the composite, the gap may be maintained at about 10 mm or less, about 3 mm or less, about 0.5 to about 5 mm, or another suitable size. Optionally, a drive mechanism may move anode **200**, cathode **220**, or both to maintain the desired gap size.

Optionally, the cathode may have a non-conductive abrasive outer surface positioned such that the abrasive material touches the workpiece. In such a situation, the abrasive material may protrude from the anode and fill some or all of the gap. In other embodiments, however, a gap may be maintained between the workpiece and all parts of the cathode.

Optionally, cathode **220** may move in multiple directions, such as an electro discharge grinder having a rotating cathode which rotates about an axis as well as moves toward the anode. Such rotation may be along an axis that is parallel to the direction of the motion toward the anode, perpendicular to such a direction, or otherwise positioned.

Also optionally, cathode **220** may be cylindrical, barrel-shaped, or otherwise shaped (such as with a plurality of bars positioned to form a cylindrical group) so that the workpiece may be placed inside the cathode. The anode may then be connected to the workpiece so that the workpiece may be rotated within the cathode, or the cathode may be rotated around the workpiece. The cathode has an outer diameter that may be squeezed or otherwise moved inward to maintain a gap between the cathode and workpiece/anode. Optionally, a plurality of cathodes may be arranged in a pattern so that a workpiece is extruded through a plurality of cathodes, each cathode in the series having a progressively smaller inner diameter.

Although partial dissolution of the composite may occur over a wide range of applied voltages, in an embodiment, dissolution of the matrix may be most prevalent in the transpassive regime, which is the condition under which the normal passivation of the metal surface is disrupted. The dissolution process may be controlled by potentiometric (voltage-controlled), galvanometric (current-controlled), or a combination of potentiometric and galvanometric methods. Suitable voltages to be applied across the electrochemical apparatus include, for example, voltages in the range of about 5 to about 50 volts, or about 10 to about 40 volts. Although direct currents are preferred, alternating currents, such as biased alternating currents or pulsed alternating currents, also may be used. When an alternating current is applied, the voltage for the forward dissolution reaction may be, for example, between about 5 and about 50 volts RMS. Current densities of about 10 to about 100 A/cm² of electrode area, about 15 to about 80 A/cm² of electrode area may be achieved in the apparatus. Current densities as described herein are measured based on the smaller area of either the cathode surface **225** facing the conductive composite or the composite body surface **230** facing the cathode. Other voltages and current densities are possible. Because dissolution rate is generally proportional to current density, these current densities may provide rapid composite body dissolution. Higher current densities may be possible if applied under conditions that do not result in overheating of the electrolyte. For example, higher current densities may be achieved by cooling the electrolyte or the composite during the dissolution process.

The electrolyte **250** may be flushed through the gap between the conductive composite and the cathode to maintain conductivity and to remove the dissolution products **260** and the non-conductive phase **210** of the composite. The electrolyte **250** may be introduced to the gap directly through the cathode **220**, through the composite **200** and/or from an external source, such as a nozzle **255**. Electrolyte flow rates may be adjusted to suit the geometry of the system, in particular based upon the area of the cathode facing the composite surface to be dissolved. In general, electrolyte flow rates of more than about 300 milliliters per minute per square centimeter (mL/min/cm²) of cathode area facing the composite, between about 1 liter per minute per square centimeter (L/min/cm²) and about 5 L/min/cm², and/or greater than about 1200 mL/min/cm² may be used, although other flow rates are possible. Optionally, the electrolyte may also be agitated, such as through mechanical or ultrasonic agitation.

The applied voltage and electrolyte flow may electrolytically dissolve the conductive matrix, releasing the non-conductive particulate phase. For clarification, when referring to "dissolution" of the composite we do not mean to imply that the non-conductive particulate is necessarily dissolved into the electrolyte, but rather that the conductive matrix is separated, dissolved or otherwise reacted thereby physically and chemically freeing the non-conductive particulate. The non-conductive component may then be carried away by the flowing electrolyte, gravitational,or other forces. In some embodiments, at least about 25% of the volume or mass of the conductive composite may be released in the process. In other embodiments, the composite body may be substantially or completely dissolved. Other percentages are possible.

Referring to FIG. 2, as the conductive phases **205** are dissolved, they may be generally converted into metal hydroxide precipitates and/or other compounds **260**. These dissolution products **260** substantially remain in suspension and are carried away in the electrolyte stream **250**. It may be desirable to reuse the electrolyte before it is discarded or recycled. In such circumstances, the level of metal hydroxide and/or other matrix dissolution products entrained or dissolved in the electrolyte may be allowed to reach about 1% by weight, about 5% by weight, about 10% by weight, up to about 15% by weight, or higher without detrimental effect on the dissolution process.

After dissolution, the electrically conducting fraction **205** of the composite body **200** may be entrained in the electrolyte flow **250** as metal hydroxide and/or other dissolution products. They may be separated from the electrolyte by any suitable method such as sedimentation, flotation, filtration, selective wetting, centrifugation, skimming, etc. The recovered matrix dissolution products **260** may then be utilized as a source of the metallic compounds which may contain metals from any of Groups IIIA through VIIA, Group VIII, and Groups IB, IIB, IIIB and IVB of the Periodic Table, including but not limited to chromium, manganese, iron, cobalt, nickel, copper, zinc, and aluminum; conductive organics; and/or graphite. Any non-conducting fraction **210** of the composite materials which were originally embedded in the conductive matrix and entrained as released particulate in the electrolyte may be separated from the electrolyte **250** and the metal hydroxide and other matrix dissolution products **260** by any suitable method such as filtration, sedimentation, evaporation, centrifugation, flotation and/or elutriation in order to be reclaimed for reuse. For example, when processed by this method, a conductive composite comprised of a cobalt metal matrix with tungsten carbide particles in the conductive matrix may yield, after dissolution, an electrolyte containing a suspension of tungsten carbide and cobalt hydroxide. The tungsten carbide particles may be separated from the electrolyte and the cobalt hydroxide by any suitable method, such as by exploiting the density differences in a settling device. Having removed the non-conductive component, the cobalt hydroxide can be separated from the electrolyte, such as by filtration, centrifugation, evaporation, or settling using other known methods or devices.

In another embodiment, the conductive fraction of the matrix may react with the electrolyte to form a hydroxide that may become entrained into the electrolyte. The non-conductive dispersed or reinforcing particles in the composite may also be entrained, substantially unreacted, into the electrolyte stream and be removed from the inter-electrode gap. In certain embodiments, the process as described may dissolve at least a significant portion of the composite and release constituents for collection and use. In an embodiment, the non-conductive particles may be released from the conductive matrix free or substantially free from contamination by residues adhering to the surfaces. This may be achieved by adjusting the electrolyte composition, pressure and/or temperature, which may vary depending on the composite body to be dissolved.

In various embodiments, the presently described processes and apparatus may eliminate the need for corrosive acids in the electrochemical dissolution processes. Additionally, in many embodiments the pre-processing step of milling or crushing the composite body may be avoided. Several variables may be optimized in the electrochemical process, depending on the composite body to be dissolved. Examples of these variables include, but are not limited to: current density, voltage, inter-electrode gap size, electrolyte composition and/or concentration, electrolyte flow rate, and electrolyte temperature. Any or all of these may be adjusted to provide an energy efficient, rapid and stable dissolution process with little or no detrimental effect on the non-conductive particles released from the composite. The electrical parameters such as the current, voltage and/or gap size may be controlled to ensure a safe operation by avoiding short-circuiting of the electrochemical apparatus. The variables may also be controlled to avoid or minimize undesirable side reactions within the apparatus, such as degradation of the electrolyte with the potential formation of chlorine and ammonia gases. Such side reactions may be avoided or reduced by controlling the pH of the electrolyte. For example, in various embodiments the pH may be maintained at about 6 to about 11, or about 6.5 to about 10, or about 6.5 to about 9, or about 7 to about 10, or within another suitable range.

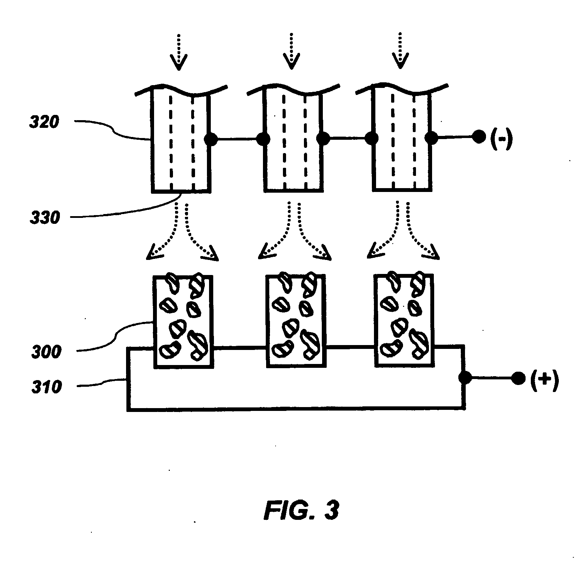

While the above description refers to a single composite body being dissolved using this method, the method can be applied to any number of composite bodies attached to a single anode or multiple anodes and dissolved using a single cathode or multiple cathodes and electrolyte introduction points. Furthermore, the cathode, anode, composite, and electrolyte introduction points may be oriented in any way, absolutely and relative to each other. One of many possible configurations is shown in FIG. 3, where an array of three composite bodies **300** are clamped or otherwise electrically connected, to an anode **310** with the cathode **320** aligned vertically above each composite body **300**. In this embodiment, electrolyte may be introduced to the inter-electrode gap through one or more ports **330** in one or more of the cathodes. Ports may comprise distinct openings or simply passages, such as may exist if the electrode were porous, woven and/or mesh (as with a screen). Of course, there may be certain configurations, such as different numbers of cathodes, which may be more suitable and more efficient than others, depending on the specific application.

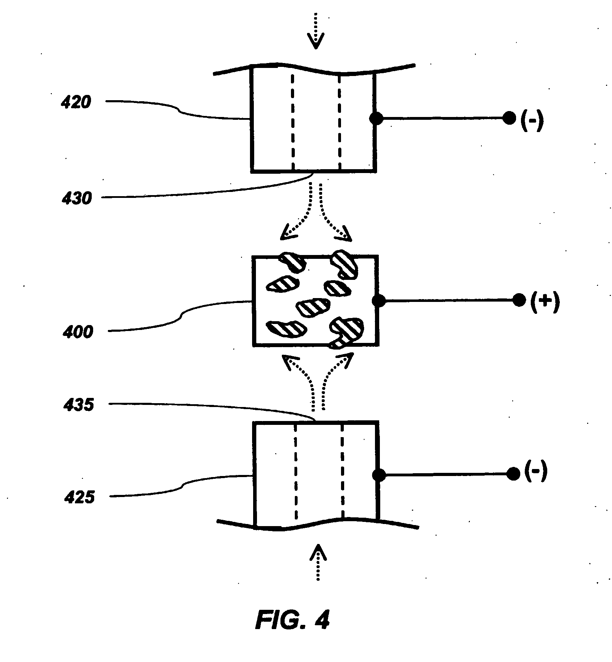

FIG. 4 illustrates an alternate embodiment showing that more than one cathode may be used for each composite body to further promote dissolution. Referring to FIG. 4, composite body **400** may be positioned between two cathodes **420** and **425**. Thus, a first cathode surface **430** promotes dissolution at one side **440** of the composite body and a second cathode surface **435** promotes dissolution at another side **450** of the composite body. Other numbers of cathode per composite body may be used.

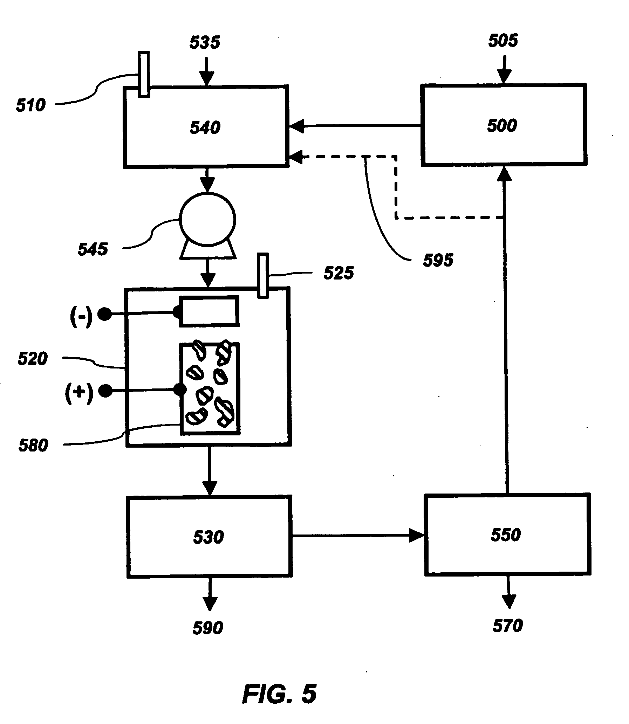

A continuous or semi-continuous process of electrochemically dissolving conductive matrix composites is described in one embodiment as shown in FIG. 5. The conductive matrix composite **580** is placed in a dissolution chamber **520**, wherein the electrolyte, supplied from the electrolyte supply tank **540** or other supply, optionally from the dissolution pump **545** or other delivery mechanism, may flush the non-conductive particles and matrix dissolution products from the dissolution chamber. The dissolution chamber **520** may include or be connected to a vent **525** to remove vapors formed during the dissolution process. The electrolyte stream leaving dissolution chamber **500** and containing the released non-conductive particles and conductive matrix dissolution product may be treated by one or more methods such as settling, centrifuging, filtering, evaporation or other separating methods in a separation device **530** to remove some or all of the non-conductive particulates **590**, and to allow recycling of the electrolyte for reuse. From the separator **530**, the electrolytic solution may be conveyed to a second separation device **550** to remove some or all of the metallic hydroxides or such compounds **570** or native elements as may have formed during electrolytic dissolution of the composite **580**. The order of the preceding separation steps may be reversed. After complete or partial removal of these compounds, the electrolyte may be conveyed to an electrolyte recycle tank **500** or directly **595** to the electrolyte supply tank **540**. Alternatively, the electrolyte leaving the separator **530** may be conveyed directly to the electrolyte supply tank **540**. Optionally, to ensure that a sufficient supply of electrolyte is available, electrolyte lost to reaction or carried out with solid components may be replaced from an electrolyte make-up source **505**, which may be connected to the recycle tank **500**, supply tank **540**, or another suitable element. The separated matrix dissolution products **570** may be further concentrated by suitable methods such as filtration resulting in a sludge or cake discharge.

Optionally, a pH sensor **510** may detect the pH of the electrolyte. Acidic or alkaline solution **535** may be added to the electrolyte to maintain a suitable pH, such as about 6 to about 11 or about 6.5 to about 9. The electrolyte pH may be adjusted by addition of any suitable acid, such as nitric or hydrochloric acid or alkali in the form of an alkali-metal hydroxide. The adjusted electrolyte may be delivered to the dissolution chamber **520**. Thus, a process with continuous or substantially continuous recycle of electrolyte, removal of dissolution products, and recovery of non-conductive particles from a conductive composite is herein described.

### EXAMPLES

*Example 1:* An aluminum alloy metal matrix composite prism containing about 10 volume percent silicon carbide particulate may be secured, electrically and mechanically, to the copper anode of an electrochemical apparatus by a mechanical clamping force in the range of 100 kg/cm². The area of the cathode surface facing the composite may be 30 cm². The cathode may be fabricated from copper and positioned opposite the composite prism to form an inter-electrode gap. The gap between the cathode and the composite body may be controlled during dissolution to a size of about 2 mm (+/- 1 mm). The electrolyte, sodium nitrate at a concentration of about 25%, a pH of about 7.5 and a temperature of about 50°C, may be flushed into the inter-electrode gap, through the cathode at a rate of about 70 liters per minute. A potential of about 25 volts (DC) may be applied to the electrochemical apparatus, which results in a current density of about 30 A/cm². The conductive composite reacts with the electrolyte, producing primarily aluminum hydroxide and silicon carbide particles. The silicon carbide particles may be recovered by settling from the electrolyte solution.

*Example 2:* Diamond was separated from a nickel/iron/graphite/diamond composite containing approximately 13 weight percent diamond and approximately 25 weight percent graphite. The conductive composite was in the form of a right circular cylinder with 30 cm² flat end area. One flat end was magnetically secured to a flat plate anode of an electrochemical recovery apparatus. The cathode of the apparatus was a copper right cylinder having a central orifice to supply electrolyte. The flat end of the cathode facing the composite was approximately the same diameter as the flat end of the conductive composite. The electrolyte, an aqueous solution of sodium nitrate at a concentration of about 20% NaNO₃ by weight, a pH of about 7 and a temperature of about 50°C, was flushed into the gap between composite body (anode) and cathode through the cathode at a rate of about 70 liters per minute at a pressure between about 1 and 5 bar. A direct current voltage of about 23 to about 28 volts was applied to the apparatus, resulting in a current density of approximately 30 A/cm² of electrode area. The gap between the cathode and the composite body was controlled to approximately 2mm (+/- 1mm) during dissolution of the composite. As shown in Table 1, in several runs between 1 and 2.5 hours in length, between about 60 and about 210 cubic centimeters of the composite were dissolved. The effluent containing non-conductive diamond particles and dissolution products containing iron and nickel hydroxides and graphite was collected. The diamond was allowed to settle. The electrolyte containing iron hydroxides, nickel hydroxides and graphite was decanted and the diamond was recovered for further processing.

**TABLE 1**

| **Test No.** | **Time (minutes)** | **Cathode Advance Rate (mm/min.)** | **Voltage (volts DC)** | **Current (amps)** | **Electrolyte Pressure (pascals)** | **Temperature (degrees C)** | **pH** |
|---|---|---|---|---|---|---|---|
| 1 | 130 | 0.48 | 25 - 26 | 1040 - 1070 | 200 - 275 | 47 - 51 | 6.9 |
| 2 | 60 | 0.38 | 23 - 24 | 980 - 1040 | 200 - 275 | 49 - 52 | 6.9 |
| 3 | 145 | 0.48 | 26 - 28 | 1090 - 1190 | 200 - 275 | 47 - 54 | 6.9 |
| 4 | 55 | 0.38 | 26 - 27 | 950 - 1050 | 170 - 200 | 49 - 54 | 6.9 |

*Example 3:* A composite of similar composition and geometry to Example 2 was placed in the electrochemical apparatus described in FIG. 1. The composite was attached to the apparatus' anode with a mechanical clamp on one end of the composite cylinder. The test was conducted in the same manner as in Example 2 except that the electrolyte was a solution mixture of sodium nitrate and sodium chlorate in a weight ratio of about 2:1 respectively. In this example, direct current potential of about 18 volts was applied to the apparatus. The cathode approached the composite at about 0.3 mm/min. Under these conditions, the apparatus consumed about 820 A current. Electrolyte was supplied at a temperature 30° C, a flow rate of 0.5 to 1.0 L/min/cm², and a pressure of approximately 2 bar. The diamond crystals were recovered after sedimentation from the effluent electrolyte.

What has been described and illustrated herein includes various embodiments of the invention along with some of their variations. The terms, descriptions, and figures used herein are set forth by way of illustration only and are not meant as limitations. Those skilled in the art will recognize that many variations are possible within the spirit and scope of the invention, which is intended to be defined by the following claims and their equivalents in which all terms are meant in their broadest reasonable sense unless otherwise indicated.

## Claims

1. A process of recovering a material from a conductive composite, comprising:
at least partially dissolving a solid body (180) through electrolytic dissolution, wherein:
the body comprises a conductive matrix (140) and one or more non-conductive constituents (150), and
recovering one or more materials released from the body in the dissolution, **characterised in that**
the dissolving is conducted at a current having a density of about 10 A/cm² to about 100 A/cm².

2. The process of claim 1, wherein the dissolution is conducted in the presence of an electrolyte having a pH between about 6 and about 11.

3. The process of claim 1, wherein:
the electrolytic dissolution uses a cathode;
a gap exists between the cathode and the body; and
the gap is maintained to be less than about 10 millimeters in size by moving the cathode,
the body, or both the cathode and the body.

4. The process of claim 1, wherein:
the electrolytic dissolution uses a cathode; and
an electrolyte flow having a rate greater than 300 milliliters per minute per square centimeter of cathode area facing the body is directed into a gap between the cathode and the body.

5. The process of claim 1, wherein the current density is between about 15 A/cm² and about 100 A/cm².

6. The process of claim 2, wherein the electrolyte comprises a concentrated alkali metal in solution, an alkaline earth salt in solution or an ammonium salt in solution.

7. The process of claim 1, wherein the non-conductive constituents comprise diamond, and the process further comprises feeding at least a portion of the released diamond to a separation device for recovery.

8. The process of claim 1, wherein the conductive composite may form the anode or be attached to the anode using a mechanical, magnetic, pneumatic or electrical force, a gap of less than about 10 mm exists between the cathode and the body, and the process further comprises maintaining the gap by moving the cathode, the body, or both the cathode and the body.

9. The process of claim 1, wherein the electrolyte has a conductivity that is in excess of about 100 millisiemens at temperatures in the range of about 10° to about 90° C.

10. The process of claim 1, wherein the released non-conductive materials comprise diamond.

11. The method of claim 1, wherein the electrolyte has a pH of about 6.5 to about 9.

12. The method of claim 1, wherein the conductive composite body is comprised of graphite, metal and non-conducting material.

13. The method of claim 1, wherein the electrolyte comprises one or more metal chlorates, metal nitrates, metal chlorides, or mixtures thereof.

14. The method of claim 1, further comprising advancing one or both of the electrodes toward the other as the composite body is processed.

15. The method of claim 1, wherein a layer of conductive material,
is positioned between the anode and the composite and wherein the anode is selected from the group of a monolithic member, a wire, a group of wires, and a mesh.

16. The method of claim 1, wherein the processing is performed at an electrolyte gage pressure that is about 1 bar to about 5 bar.

## Patentansprüche

1. Verfahren zur Gewinnung eines Materials aus einem elektrisch leitfähigen Verbundstoff, welches das wenigstens teilweise Auflösen eines festen Körpers (180) durch elektrolytische Auflösung umfasst, wobei der Körper eine elektrisch leitfähige Matrix (140) und einen oder mehrere nicht elektrisch leitfähige Bestandteile (150) umfasst, und
Gewinnen eines oder mehrerer Materialien, die aus dem Körper in die Lösung freigesetzt wurden,
**dadurch gekennzeichnet, dass**
das Auflösen bei einem Strom mit einer Dichte von etwa 10 A/cm² bis etwa 100 A/cm² durchgeführt wird.

2. Verfahren nach Anspruch 1, wobei das Auflösen in der Gegenwart eines Elektrolyten mit einem pH-Wert zwischen etwa 6 und etwa 11 durchgeführt wird.

3. Verfahren nach Anspruch 1, wobei
das elektrolytische Auflösen eine Kathode verwendet,
zwischen der Kathode und dem Körper eine Lücke existiert und
die Größe der Lücke geringer als etwa 10 Millimeter gehalten wird, indem man die Kathode, den Körper oder beides, die Kathode und den Körper, bewegt.

4. Verfahren nach Anspruch 1, wobei
das elektrolytische Auflösen eine Kathode verwendet und
ein Elektrolytfluss mit einer Geschwindigkeit von mehr als 300 Millilitern pro Minute pro Quadratzentimeter Kathodenfläche, welche dem Körper zugewandt ist, in eine Lücke zwischen der Kathode und dem Körper gerichtet ist.

5. Verfahren nach Anspruch 1, wobei die Stromdichte zwischen etwa 15 A/cm² und etwa 100 A/cm² beträgt.

6. Verfahren nach Anspruch 2, wobei der Elektrolyt ein konzentriertes Alkalimetall in Lösung, ein Erdalkalimetallsalz in Lösung oder ein Ammoniumsalz in Lösung enthält.

7. Verfahren nach Anspruch 1, wobei die nicht elektrisch leitfähigen Bestandteile Diamant umfassen und das Verfahren zur Gewinnung weiterhin das Zuführen wenigstens eines Teils des freigesetzten Diamants zu einer Abtrennvorrichtung umfasst.

8. Verfahren nach Anspruch 1, wobei der elektrisch leitfähige Verbundstoff die Anode bilden kann oder unter Nutzung einer mechanischen, magnetischen, pneumatischen oder elektrischen Kraft an der Anode angebracht sein kann, wobei zwischen der Kathode und dem Körper eine Lücke von weniger als etwa 10 mm existiert und das Verfahren weiterhin das Aufrechterhalten der Lücke durch Bewegen der Kathode, des Körpers oder von beidem, der Kathode und des Körpers, umfasst.

9. Verfahren nach Anspruch 1, wobei der Elektrolyt eine Leitfähigkeit über etwa 100 Millisiemens bei Temperaturen im Bereich von etwa 10° bis etwa 90° C hat.

10. Verfahren nach Anspruch 1, wobei die freigesetzten nicht elektrisch leitfähigen Materialien Diamant umfassen.

11. Verfahren nach Anspruch 1, wobei der Elektrolyt einen pH-Wert von etwa 6,5 bis etwa 9 hat.

12. Verfahren nach Anspruch 1, wobei der elektrisch leitfähige Verbundkörper aus Graphit, Metall und nicht leitfähigem Material besteht.

13. Verfahren nach Anspruch 1, wobei der Elektrolyt ein oder mehrere Metallchlorate, Metallnitrate, Metallchloride oder Gemische davon umfasst.

14. Verfahren nach Anspruch 1, welches weiterhin umfasst, dass eine oder beide Elektroden in Richtung der jeweils anderen bewegt werden, während der Verbundkörper verarbeitet wird.

15. Verfahren nach Anspruch 1, wobei zwischen der Anode und dem Verbundstoff eine Lage aus leitfähigem Material angeordnet ist und wobei die Anode aus der Gruppe ausgewählt ist, bestehend aus einem monolithischen Teil, einem Draht, einer Gruppe von Drähten und einem Netz.

16. Verfahren nach Anspruch 1, wobei die Verarbeitung bei einem Elektrolytpegeldruck durchgeführt wird, der etwa 1 bar bis etwa 5 bar beträgt.

## Revendications

1. Un procédé de récupération d'un matériau à partir d'un composite conducteur, comprenant au moins la dissolution partielle d'un corps solide (180) par dissolution électrolytique, dans lequel
- le corps comprend une matrice conductrice (140) et un ou plusieurs constituants non conducteurs (150), et
- la récupération d'un ou plusieurs matériaux libérés du corps au cours de la dissolution, **caractérisé en ce que** le courant employé pour la dissolution présente une densité comprise entre environ 10 A/cm² et environ 100 A/cm².

2. Le procédé selon la revendication 1, dans lequel la dissolution est effectuée en présence d'un électrolyte ayant un pH compris entre environ 6 et environ 11.

3. Le procédé selon la revendication 1, dans lequel:
- la dissolution électrolytique utilise une cathode;
- il existe entre la cathode et le corps un espace,
- et l'espace est maintenu à une valeur inférieure à environ 10 millimètres par déplacement de la cathode, le corps, or de la cathode et le corps.

4. Le procédé selon la revendication 1, dans lequel:
- la dissolution électrolytique utilise une cathode, et
- l'électrolyte, alimenté selon un taux supérieur à 300 millilitres par minute par centimètre carré de zone de surface de cathode faisant face au corps est dirigé, est dirigé dans un espace entre la cathode et le corps.

5. Le procédé selon la revendication 1, dans lequel la densité du courant est comprise entre environ 15 A/cm² et environ 100 A/cm²

6. Le procédé selon la revendication 2, dans lequel l'électrolyte comprend une solution d'un métal alcalin concentré, une solution d'un sel alcalino-terreux ou une solution d'un sel d'ammonium.

7. Le procédé selon la revendication 1, dans lequel les constituants non conducteurs comprennent du diamant, ledit procédé comprenant en outre l'alimentation d'au moins une partie du diamant libéré dans un dispositif de séparation en vue de sa récupération.

8. Le procédé selon la revendication 1, dans lequel
- le composite conducteur peut former l'anode ou être lié à l'anode en faisant emploi d'une force mécanique, magnétique, pneumatique ou électrique
- existe, entre la cathode et le corps, un espace inférieur à environ 10 mm et ledit procédé comprenant le maintien de l'espace par déplacement de la cathode, le corps, ou la cathode et le corps.

9. Le procédé selon la revendication 12, dans lequel l'électrolyte présente une conductivité qui est supérieure à environ 100 millisiemens à des températures dans la plage d'environ 10°C à environ 90°C.

10. Le procédé selon la revendication 1, dans lequel les constituants non conducteurs libérés comprennent du diamant

11. Le procédé selon la revendication 1, dans lequel l'électrolyte présente un pH d'environ 6,5 à environ 9.

12. Le procédé selon la revendication 1, dans lequel le corps composite conducteur est constitué de graphite, de métal et d'un matériau non-conducteur.

13. Le procédé selon la revendication 1, dans lequel l'électrolyte comprend un ou plusieurs chlorates métalliques, nitrates métalliques, chlorures métalliques ou leurs mélanges.

14. Le procédé selon la revendication 1, comprenant en outrel'avancée de l'une ou des deux électrodes l'une vers l'autre au fur et à mesure de traitement du corps composite.

15. Le procédé selon la revendication 1, dans lequel une couche d'un matériau conducteur est disposé entre l'anode et le composite et dans lequel l'anode est choisi dans le groupe comprenant un élément monolithique, un fil électrique, un groupe de fils électriques et un tamis.

16. Le procédé selon la revendication 1, dans lequel le procédé est mis en ouvre sous une pression manométrique de l'électrolyte qui est de l'ordre de 1 bar à environ 5 bars.
